# FASCICULE DE BREVET EUROPEEN

(11) **EP 3 564 108 B1**
(45) Date de publication et mention de la délivrance du brevet: **14.12.2022**
(21) Numéro de dépôt: 19171977.2
(22) Date de dépôt: 30.04.2019
(51) Int. Cl.: B62M 3/08, B62M 1/00

(54) **PÉDALE AUTOMATIQUE DE BICYCLETTE**
FAHRRADPEDAL MIT SCHUHPLATTENEINGRIFFSELEMENT
BICYCLE PEDAL CLEAT

(30) Priorité: 30.04.2018 FR 1800389
(43) Date de publication de la demande: 06.11.2019
(73) Titulaire: SRAM LLC, County of Kent, Delaware 19904 (US)
(72) Inventeur: MARINIER, Benjamin, 38100 GRENOBLE (FR); NOBILE, Pascal, 38220 LAFFREY (FR)
(74) Mandataire: Novaimo

(56) Documents cités:
- FR-A1- 2 862 041
- FR-A3- 2 984 842
- US-A1- 2008 121 068

## Description

### Domaine technique de l'invention

La présente invention concerne une pédale de bicyclette à enclenchement et déclenchement automatiques. L'invention se rapporte également à une bicyclette équipée de telles pédales.

### État de la technique

Pour la pratique du cyclisme, on connaît l'utilisation de pédales à enclenchement et déclenchement automatiques, c'est-à-dire équipées d'un mécanisme pour bloquer en position la chaussure de l'utilisateur par rapport à la pédale, ce qui améliore la transmission des efforts de pédalage. De telles pédales comprennent une mâchoire destinée à coopérer avec une cale fixée sous une semelle d'une chaussure. La mâchoire est mobile entre une position de maintien dans laquelle elle permet le blocage en position de la cale par rapport à la pédale, et une position d'ouverture dans laquelle elle libère la cale par rapport à la pédale. Ces pédales comprennent également un moyen de rappel élastique agencé de sorte à contraindre la mâchoire dans la position de maintien. Le document FR2984842 divulgue une pédale similaire.

Le moyen de rappel élastique qui contraint la mâchoire contre la cale peut présenter une raideur élevée, notamment pour éviter un déclenchement intempestif lorsque les efforts de pédalage sont soutenus. Lorsque la raideur du moyen de rappel élastique est élevée, l'enclenchement de la cale sur la pédale devient plus difficile. On connaît l'utilisation d'un cliquet apte à retenir la mâchoire en position ouverte, à l'encontre du moyen de rappel élastique, de manière à faciliter l'enclenchement de la cale sur la pédale. Un appui de la cale sur le cliquet désactive la retenue de la mâchoire qui bascule automatiquement dans sa position de maintien.

Toutefois, ces pédales présentent un risque de désactivation intempestif de la retenue de la mâchoire exercée par le cliquet. Notamment, alors que le cycliste cherche à enclencher la pédale, il peut appuyer involontairement sur le cliquet alors que son pied n'est pas encore correctement en position sur la pédale. La mâchoire bascule alors dans sa position de maintien alors que la cale n'est pas correctement en position. L'opération d'enclenchement automatique échoue et le cycliste doit alors répéter l'opération. Il doit éventuellement refaire basculer manuellement la mâchoire dans sa position d'ouverture.

### Objet de l'invention

Le but de l'invention est de fournir une pédale de bicyclette remédiant aux inconvénients ci-dessus et améliorant les pédales connues de l'art antérieur.

Plus précisément, l'invention a pour objet de fournir une pédale de bicyclette dont le chaussage est fiabilisé et facile.

A cet effet, l'invention porte sur une pédale pour une bicyclette comprenant:
- un corps rotatif destiné à être monté sur un axe de pédale,
- une mâchoire destiné à coopérer avec une cale fixée sous une semelle d'une chaussure, la mâchoire étant mobile entre une position de maintien dans laquelle elle participe au maintien en position d'une cale de chaussure sur la pédale, et une position d'ouverture dans laquelle elle libère une cale de chaussure de la pédale,
- un moyen de rappel élastique agencé de sorte à contraindre la mâchoire vers la position de maintien,
- un moyen d'arrêt, ledit moyen d'arrêt comprenant une première zone de liaison coopérant avec la mâchoire de sorte à retenir la mâchoire dans la position d'ouverture à l'encontre du moyen de rappel élastique en l'absence d'une cale de chaussure, ledit moyen d'arrêt comprenant une deuxième zone de liaison avec le corps, ledit moyen d'arrêt s'étendant depuis sa première zone de liaison vers sa deuxième zone de liaison du même côté que celui vers lequel la mâchoire se déplace lorsqu'elle passe de sa position de maintien à sa position d'ouverture.

La deuxième zone de liaison peut être liée avec le corps de la pédale.

La mâchoire peut être une mâchoire arrière, la deuxième zone de liaison étant positionnée à l'arrière de la première zone de liaison, ou la mâchoire peut être une mâchoire avant, la deuxième zone de liaison étant positionnée à l'avant de la première zone de liaison.

Le moyen d'arrêt peut se présenter sous la forme d'une lame comprenant une partie libre travaillant en flexion.

Le moyen d'arrêt peut présenter une partie libre travaillant en flexion de longueur strictement supérieure à la longueur mesurée dans la direction longitudinale entre un axe de la pédale et un axe de rotation de la mâchoire.

La deuxième zone de liaison avec le corps du moyen d'arrêt peut comprendre une languette encastrée au sein du corps.

La mâchoire peut être une mâchoire arrière, la deuxième zone de liaison avec le corps du moyen d'arrêt étant disposée à l'arrière d'un axe de rotation de la mâchoire arrière, la mâchoire peut être une mâchoire avant, la deuxième zone de liaison avec le corps du moyen d'arrêt étant disposée à l'avant d'un axe de rotation de la mâchoire avant.

La première zone de liaison du moyen d'arrêt peut comprendre au moins une branche pour coopérer avec la mâchoire.

La première zone de liaison du moyen d'arrêt peut comprendre deux branches de part et d'autre d'une zone d'extrémité du moyen d'arrêt, pour coopérer avec la mâchoire, le moyen d'arrêt se présentant comme une lame en forme de « T ».

Le moyen d'arrêt peut comprendre une surface de réception apte à recevoir l'appui d'une cale fixée sous une semelle d'une chaussure pour désactiver la retenue de la mâchoire en exerçant un effort en flexion sur le moyen d'arrêt.

La mâchoire peut présenter une forme d'arceau articulée par sa partie inférieure autour d'un axe de rotation fixé sur le corps et peut comprendre un élément transversal en partie supérieure apte à coopérer avec une partie d'une cale de chaussure.

La mâchoire peut comprendre une ouverture centrale au travers de laquelle s'étend le moyen d'arrêt.

Le moyen de rappel élastique peut être un ressort de torsion agencé autour d'un axe de rotation de la mâchoire.

La pédale peut comprendre une vis de réglage de la tension du moyen de rappel élastique.

La pédale peut comprendre une unique ouverture apte à recevoir une cale fixée sous une semelle d'une chaussure, l'ouverture étant délimitée à l'avant par une mâchoire avant et à l'arrière par une mâchoire arrière.

Le moyen d'arrêt peut faire saillie partiellement dans ladite ouverture depuis la deuxième zone de liaison vers la première zone de liaison, lorsque la mâchoire est dans la position d'ouverture, sur une longueur inférieure ou égale à 25% de la longueur de l'ouverture.

L'invention porte également sur une pédale pour une bicyclette comprenant:
- un corps rotatif destiné à être monté sur un axe de pédale,
- une mâchoire arrière destiné à coopérer avec une cale fixée sous une semelle d'une chaussure, la mâchoire arrière étant mobile entre une position de maintien dans laquelle elle participe au maintien en position d'une cale de chaussure sur la pédale, et une position d'ouverture dans laquelle elle libère une cale de chaussure de la pédale,
- un moyen de rappel élastique agencé de sorte à contraindre la mâchoire arrière vers la position de maintien,
- un moyen d'arrêt, ledit moyen d'arrêt comprenant une première zone de liaison coopérant avec la mâchoire arrière de sorte à retenir la mâchoire arrière dans la position d'ouverture à l'encontre du moyen de rappel élastique en l'absence d'une cale de chaussure, ledit moyen d'arrêt comprenant une deuxième zone de liaison avec le corps, la deuxième zone de liaison étant disposée à l'arrière de ladite première zone de liaison avec la mâchoire arrière.

L'invention porte aussi sur une pédale pour une bicyclette comprenant :
- un corps rotatif destiné à être monté sur un axe de pédale,
- une mâchoire avant destiné à coopérer avec une cale fixée sous une semelle d'une chaussure, la mâchoire avant étant mobile entre une position de maintien dans laquelle elle participe au maintien en position d'une cale de chaussure sur la pédale, et une position d'ouverture dans laquelle elle libère une cale de chaussure de la pédale,
- un moyen de rappel élastique agencé de sorte à contraindre la mâchoire avant vers la position de maintien,
- un moyen d'arrêt, ledit moyen d'arrêt comprenant une première zone de liaison coopérant avec la mâchoire avant de sorte à retenir la mâchoire avant dans la position d'ouverture à l'encontre du moyen de rappel élastique en l'absence d'une cale de chaussure, ledit moyen d'arrêt comprenant une deuxième zone de liaison avec le corps, la deuxième zone de liaison étant disposée à l'avant de ladite première zone de liaison avec la mâchoire avant.

L'invention se rapporte également à un kit comprenant au moins une pédale telle que définie précédemment et au moins une cale apte à être fixée à une semelle d'une chaussure, et apte à coopérer avec la pédale.

L'invention se rapporte également à une bicyclette comprenant une pédale, notamment deux pédales telles que définies précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique de coté d'une bicyclette équipée d'une pédale selon un mode de réalisation de l'invention.
La figure 2 est une première vue tridimensionnelle d'une pédale selon un mode de réalisation de l'invention.
La figure 3 est une deuxième vue tridimensionnelle de la pédale selon le mode de réalisation de l'invention.
La figure 4 est une vue en perspective d'une mâchoire de la pédale selon le mode de réalisation de l'invention.
La figure 5 est une vue partielle de dessus de la pédale selon le mode de réalisation de l'invention.
La figure 6 est une vue partielle de dessous de la pédale selon le mode de réalisation de l'invention.
La figure 7 est une vue de l'arrière de la pédale selon le mode de réalisation de l'invention.
La figure 8 est une vue en perspective d'un cliquet de la pédale selon le mode de réalisation de l'invention.
La figure 9 est une vue en coupe de profil de la pédale selon le mode de réalisation de l'invention avec une mâchoire en position ouverte, et d'une cale destinée à être fixée à la semelle d'une chaussure.
La figure 10 est une vue en coupe de profil de la pédale selon le mode de réalisation de l'invention avec la mâchoire en position de maintien d'une cale destinée à être fixée à la semelle d'une chaussure.

### Description d'un mode de réalisation de l'invention

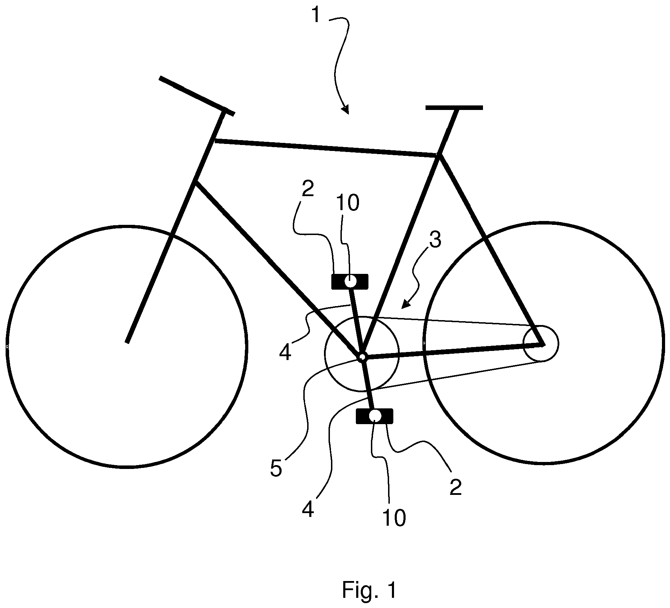

La figure 1 illustre schématiquement une bicyclette 1 équipée de deux pédales 2 selon un mode de réalisation de l'invention. Les deux pédales 2 sont reliées à un dispositif de transmission 3 par l'intermédiaire de deux manivelles 4. Les manivelles 4 sont aptes à tourner autour d'un axe de pédalier 5 tandis que les pédales 2 sont aptes à tourner par rapport aux manivelles 4 autour d'un axe de pédale 10. « L'avant » et « l'arrière » sont définis par rapport à la direction dans laquelle se déplace normalement le cycliste en ligne droite, celui-ci se déplaçant de l'arrière vers l'avant. La droite et la gauche sont définis selon le point de vue du cycliste. L'axe longitudinal désigne l'axe selon lequel se déplace le cycliste. L'axe transversal désigne un axe parallèle à l'axe de pédalier 5 et à l'axe de pédale 10. Dans la suite du document, on s'attache à décrire une pédale droite, la pédale de gauche étant symétriquement identique. On considère que la pédale est orientée horizontalement, c'est-à-dire qu'elle est orientée de sorte qu'une semelle d'une chaussure en appui sur la pédale s'étende horizontalement. Dans ce document, un premier élément est dit "à l'avant" d'un deuxième élément lorsqu'il est possible de définir un plan géométrique, perpendiculaire à l'axe longitudinal et séparant le premier élément du deuxième élément. Ainsi, le premier élément peut être décalé transversalement ou verticalement par rapport au deuxième élément tout étant considéré "à l'avant" du deuxième élément. De manière équivalente, lorsqu'un premier élément est à l'avant d'un deuxième élément, le deuxième élément est à l'arrière du premier élément.

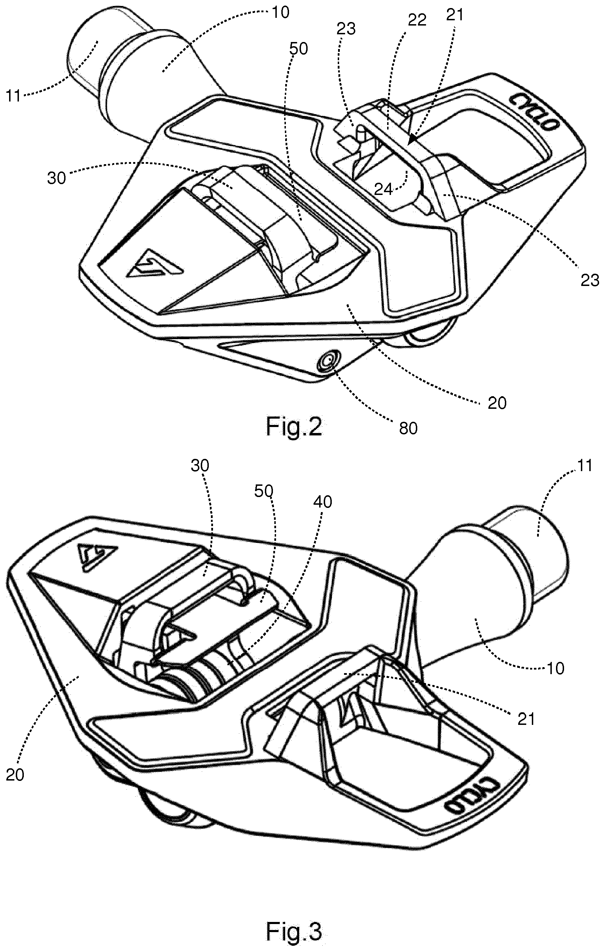

En références aux figures 2 et 3, la pédale 2 selon le mode de réalisation de l'invention comprend notamment l'axe de pédale 10, un corps 20, une mâchoire arrière 30 situé dans une partie arrière de la pédale et formant un organe de maintien de la partie arrière d'une cale de chaussure, un moyen de rappel élastique 40 et un moyen d'arrêt 50, aussi appelé cliquet, ainsi qu'une mâchoire avant 21, formant un organe de maintien de la partie avant d'une cale de chaussure. La pédale 2 est destinée à coopérer par ses deux mâchoires avec une cale fixée sous une semelle d'une chaussure d'un cycliste, selon un fonctionnement qui sera détaillé par la suite. Ni la semelle, ni la chaussure ne sont représentées sur les figures.

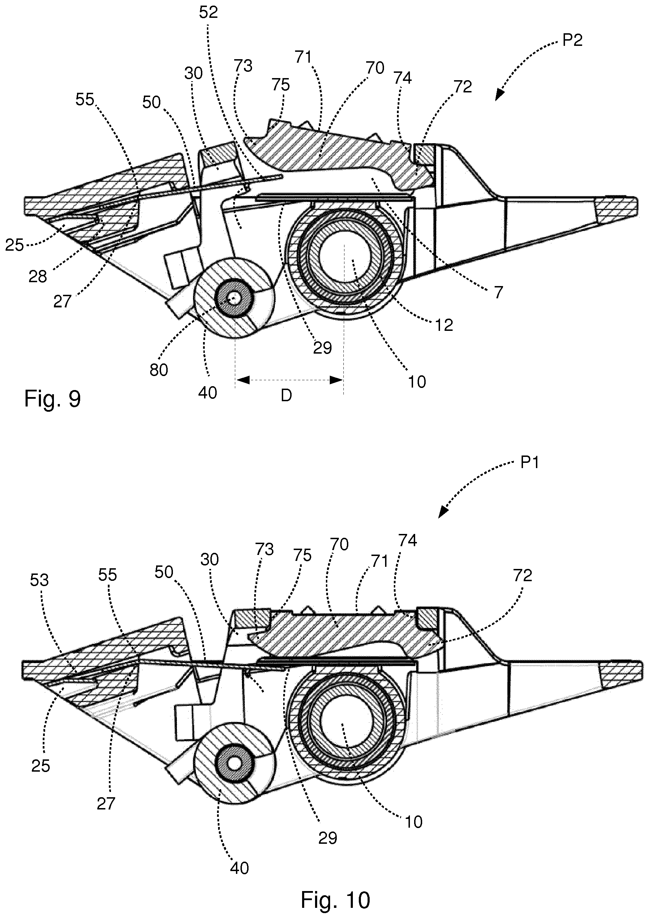

L'axe de pédale 10 est apte à être fixé à la manivelle 4 de la bicyclette via une partie filetée 11 à une extrémité de l'axe de pédale. Il est relié de manière classique au corps 20 par l'intermédiaire d'un palier 12, particulièrement visible sur les vues en coupe des figures 9 et 10. Le corps 20 est donc monté rotatif par rapport à l'axe de pédale 10.

En remarque, la pédale de la bicyclette étant mobile en rotation autour de l'axe de pédale 10, celle-ci pourrait être manuellement pivotée d'un demitour de sorte à ce que l'avant de la pédale soit tourné vers l'arrière de la bicyclette et l'arrière de la pédale soit tourné vers l'avant de la bicyclette. Toutefois cette position "à l'envers" de la pédale n'est pas une position fonctionnelle de la pédale puisqu'elle supposerait que la chaussure du cycliste soit également à l'envers, avec sa semelle tournée vers le haut. On considère donc dans ce document que la pédale est orientée de sorte à ce que la semelle de la chaussure coopérant avec la pédale fait face au sol sur lequel repose la bicyclette.

Le corps 20 est destiné à assurer une liaison entre la chaussure du cycliste et l'axe de pédale 10 et en particulier la semelle de la chaussure s'appuie par certaines zones sur la face supérieure d'une partie du corps 20. Le corps peut avoir une forme quelconque et peut être fabriqué en tout matériau, notamment en plastique, ou en plastique chargé de fibres de verre ou de carbone, mais peut être éventuellement métallique, notamment en aluminium. Le corps 20 comprend une mâchoire avant 21 positionnée à l'avant de l'axe de pédale 10. Cette mâchoire est fixe, c'est-à-dire non mobile, dans le mode de réalisation proposé, mais on ne sortirait pas du cadre de l'invention si cette mâchoire avant était mobile, par exemple mobile en rotation et sollicitée par un élément élastique. La mâchoire avant 21 prend la forme d'un arceau comprenant une barre transversale 22 et deux montants latéraux 23. Par ailleurs, le corps 20 supporte notamment la mâchoire arrière 30, le moyen de rappel élastique 40 et le moyen d'arrêt 50 ou cliquet. Ces trois éléments sont situés en partie arrière de la pédale, plus précisément à l'arrière de l'axe de rotation 10 de la pédale.

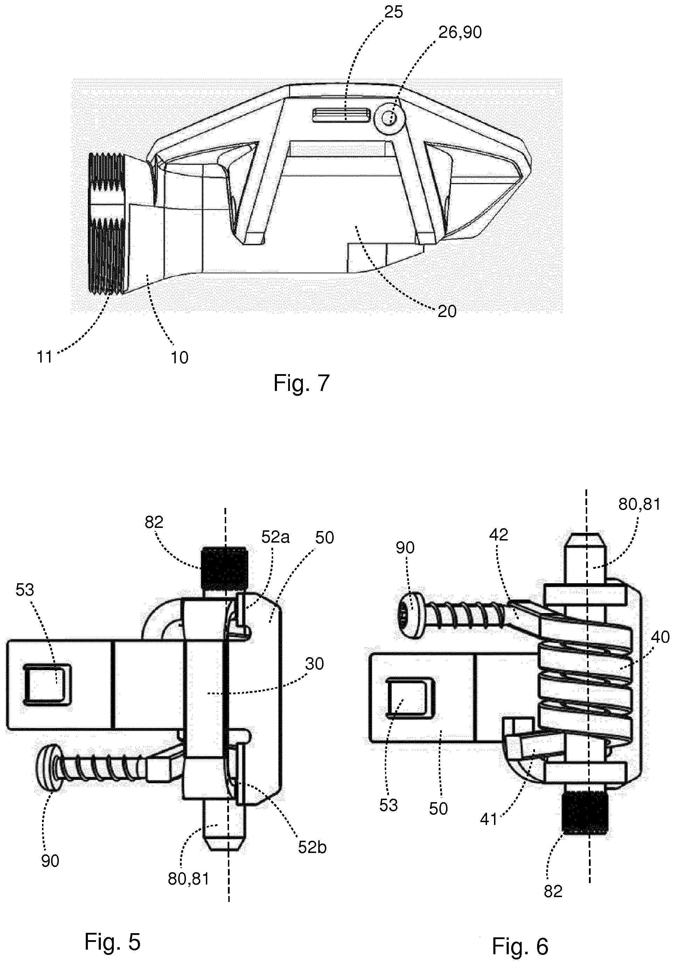

La mâchoire arrière 30 est mobile en rotation autour d'un axe de rotation 80, monté sur le corps 20. Cet axe de rotation 80 est parallèle à l'axe de pédale 10. L'axe de rotation 80 est positionné dans une partie basse de la pédale 2 et à l'arrière de l'axe de pédale 10. Cet axe de rotation 80 peut être constitué d'un goujon 81, particulièrement visible sur les figures 5 et 6. Le goujon 81 est fixé au corps 20 à ses deux extrémités, notamment grâce à une partie 82, qui peut subir un matriçage ou être une partie filetée. En variante, il peut être fixé par tout autre moyen.

La mâchoire arrière 30 coopère avec la mâchoire avant 21 pour fixer la cale d'une chaussure d'un cycliste sur la pédale 2, selon un fonctionnement qui sera détaillé par la suite, dans une position de maintien P1, comme illustré à la figure 10, dans laquelle la mâchoire arrière 30 est basculée vers l'avant. Cette mâchoire arrière 30 peut occuper une position d'ouverture P2, basculée vers l'arrière, pour libérer une chaussure d'un cycliste et permettre son enclenchement ou chaussage, comme illustré sur la figure 9. La mâchoire arrière 30 et la mâchoire avant 21 forment des mâchoires qui maintiennent en particulier une cale 70 solidarisée à la semelle d'une chaussure de cycliste.

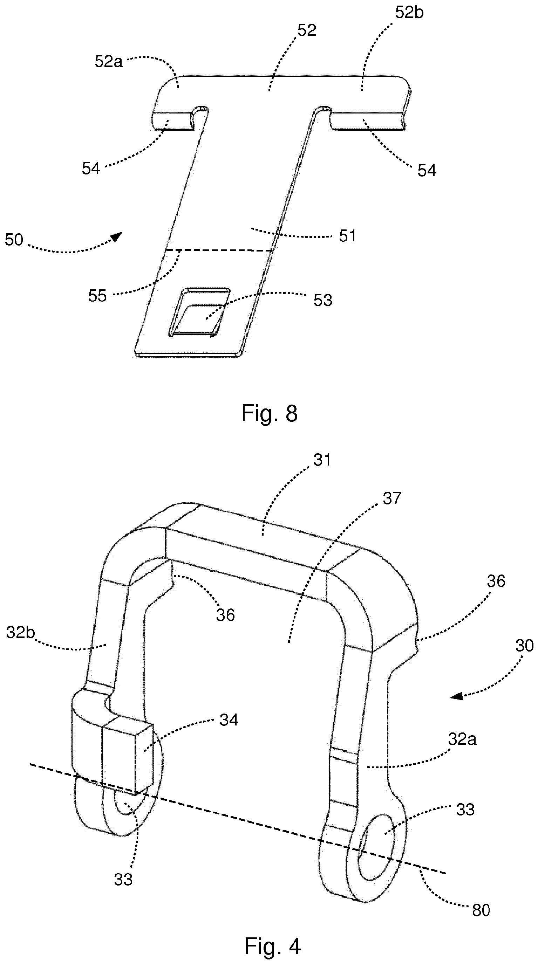

La mâchoire arrière 30, illustré sur la figure 4, se structure sous la forme d'un arceau monobloc en forme de « U » inversé. Il comprend un élément transversal 31 depuis lequel s'étendent deux pattes 32a, 32b vers le bas. Les deux pattes 32a, 32b comprennent chacune à leur extrémité inférieure une ouverture circulaire 33 coopérant avec l'axe de rotation 80. L'une des deux pattes 32a, 32b, indifféremment la patte de gauche ou la patte de droite comprend une butée pour ressort 34 coopérant avec le moyen de rappel élastique 40. A l'exception de cette butée pour ressort 34, les deux pattes 32a, 32b sont sensiblement symétriques. Chacune des deux pattes comprend en outre une surface de butée 36 formant un décalage vers l'avant par rapport aux parties inférieures des deux pattes.

De par sa forme en « U » inversé, la mâchoire dessine une ouverture 37. Cette ouverture 37 est bordée par l'élément transversal 31, les deux pattes 32a, 32b et l'axe de rotation 80. Le moyen d'arrêt 50 s'étend sensiblement longitudinalement au travers de cette ouverture 37.

Le moyen de rappel élastique 40, particulièrement visible sur la figure 6, est agencé de sorte à contraindre la mâchoire arrière 30 dans sa position de maintien P1, c'est-à-dire de sorte à la faire pivoter vers l'avant. Le moyen de rappel élastique 40 est un ressort de torsion agencé autour de l'axe de rotation 80. Il peut comprendre un nombre quelconque de spires, en fonction de la raideur choisie. La raideur du ressort de torsion 40 est choisie de telle façon qu'elle permette d'atteindre un déclenchement de la pédale en torsion à un niveau d'effort approprié au cycliste. Ainsi lorsque la cale de la chaussure exerce un effort supérieur à l'effort de déclenchement lors d'une torsion de la chaussure, la mâchoire arrière ou mâchoire arrière 30 bascule vers l'arrière et s'ouvre pour libérer la cale de la chaussure. Une première extrémité 41 du ressort de torsion est en appui contre la butée pour ressort 34 de la mâchoire arrière 30. Une deuxième extrémité 42 du ressort de torsion est en appui contre une vis de réglage 90, elle-même vissée dans le corps 20 de la pédale 2. Le vissage ou le dévissage de la vis de réglage 90 permet de modifier la tension du ressort de torsion. Ainsi, l'utilisateur de la pédale peut régler la raideur du retour élastique, autrement dit la valeur du déclenchement de la mâchoire arrière 30. La vis de réglage 90 s'étend sensiblement longitudinalement et est accessible pour réglage dans une partie arrière de la pédale 2, comme cela est visible sur la figure 7. La vis de réglage 90 peut être directement vissée dans une ouverture 26 du corps 20, sous réserve que celui-ci soit fabriqué dans un matériau suffisamment tendre, comme par exemple du plastique. La vis de réglage 90 est alors une vis auto-taraudeuse. En variante, le corps 20 peut intégrer un insert taraudé coopérant avec la vis de réglage. Enfin, selon une variante de réalisation simplifiée, la pédale pourrait être dépourvue de tout moyen de réglage de la tension du moyen de rappel élastique 40. La deuxième extrémité 42 du ressort de torsion serait alors directement en appui contre une partie du corps 20 de la pédale.

Le moyen d'arrêt 50, que l'on peut également dénommer « cliquet », est illustré sur la figure 8. Il est apte à retenir la mâchoire arrière 30 dans sa position d'ouverture P2 à l'encontre du moyen de rappel élastique 40, pour permettre d'avoir une pédale prête à chausser, et faciliter ainsi le chaussage de la chaussure dans la pédale 2. Il se présente sous la forme d'une lame s'étendant longitudinalement de l'arrière vers l'avant de la pédale. Cette lame passe à l'intérieur de l'arceau formé par la mâchoire arrière 30, c'est-à-dire dans le logement 37, sous la face inférieure de l'élément transversal 31 en partie supérieure de l'arceau de la mâchoire arrière 30. Cette lame présente dans sa partie avant une première zone de liaison destinée au maintien de la mâchoire arrière 30 en position ouverte relevée. Dans la réalisation illustrée, le moyen d'arrêt 50 a sensiblement la forme d'un « T » horizontal. Il comprend donc une partie longitudinale 51 depuis laquelle s'étendent deux branches transversale 52a, 52b dans le prolongement de la zone d'extrémité 52. Avantageusement, le moyen d'arrêt peut être réalisé à partir d'une plaque métallique emboutie ou peut être réalisé également en un matériau composite.

Les deux branches transversale 52a, 52b sont positionnées vers l'avant, par rapport à la partie longitudinale 51. Les deux branches 52a, 52b constituent la première zone de liaison susmentionnée. Cette première zone de liaison coopère avec la mâchoire arrière 30, pour la maintenir en position ouverte à l'encontre du moyen de rappel élastique 40. Ces deux branches 52a, 52b comprennent chacune un repli 54 sensiblement vertical, destiné à venir en appui contre les pattes 32a, 32b de la mâchoire arrière 30. La présence de ce repli 54 permet d'éviter que les deux branches 52a, 52b n'entrent en contact avec les pattes de maintien 32a, 32b par l'intermédiaire d'une arête, ce qui perturberait un glissement relatif entre ces deux pièces. Le contact entre le moyen d'arrêt 50 et la mâchoire arrière 30 via le repli 54 permet ainsi un glissement relatif entre ces deux pièces sans résistance excessive. Les deux branches 52a peuvent être de longueur différente selon la direction transversale, comme cela est visible sur la figure 8, notamment pour tenir compte de contraintes d'intégration du moyen d'arrêt 50 au travers de l'ouverture 37 de la mâchoire arrière 30 et à proximité de la vis de réglage 90. En variante, le moyen d'arrêt 50 pourrait ne comprendre qu'une seule branche 52a, 52b. Dans une autre forme de réalisation non illustrée, le moyen d'arrêt 50 pourrait être constitué d'une lame rectiligne recourbée à son extrémité libre pour que cette partie recourbée vers le haut constitue la première zone de liaison formant un moyen de retenue de la mâchoire arrière 30.

Le moyen d'arrêt 50 comprend, au niveau de sa partie longitudinale 51, une deuxième zone de liaison 53 apte à coopérer avec le corps 20 pour empêcher tout mouvement du moyen d'arrêt 50 vers l'avant par rapport au corps 20 et ainsi le bloquer par rapport au corps 20. Cette deuxième zone de liaison 53 est donc disposée à l'arrière de la première zone de liaison, c'est-à-dire des deux branches 52a, 52b. Autrement dit, la deuxième zone de liaison s'étend dans la direction définie par le déplacement de la mâchoire arrière 30 lorsqu'elle passe de sa position de maintien P1 à sa position d'ouverture P2. La deuxième zone de liaison 53 est constituée d'une languette coopérant avec un bord d'accroche 28 aménagé dans une ouverture longitudinale 25 du corps 20, comme cela est visible sur la figure 9. La partie arrière du moyen d'arrêt 50, et donc de la lame, est ainsi encastrée et maintenue fixe dans le corps de la pédale 2. Le moyen d'arrêt 50 peut être aisément assemblé au corps 20 en l'insérant dans l'ouverture longitudinale 25 de l'avant vers l'arrière. Le démontage du moyen d'arrêt 50 peut également être aisément effectué en comprimant la languette vers le haut, par exemple au moyen d'un tournevis, et en tirant en même tant le moyen d'arrêt vers l'avant. Ainsi, la maintenance de la pédale 2 est également aisée.

D'autre part, le moyen d'arrêt 50 n'est de préférence pas plat mais présente une certaine courbure de telle manière d'exercer une précontrainte orientée vers le haut sur la mâchoire arrière 30. Dans la réalisation illustrée, la lame formant le moyen d'arrêt 50 comprend une zone de flexion 55 au niveau de sa partie longitudinale 51 qui réalise cette précontrainte. La zone de flexion 55 est positionnée à l'arrière de la mâchoire arrière 30, et juste en avant de l'encastrement de la lame du moyen d'arrêt 50 dans le corps de la pédale. Cette zone de flexion 55 permet de monter la lame ou moyen d'arrêt 50 avec une certaine précontrainte, c'est-à-dire qu'une fois précontrainte par légère déformation vers le bas, la lame exerce un effort élastique vers le haut contre la partie inférieure de l'élément transversal 31 de l'arceau formant la mâchoire arrière 30 pour s'opposer à l'effort de l'élément élastique 40, qui a tendance à ramener l'arceau vers le bas et vers l'avant. Ainsi la mâchoire arrière 30 est maintenue en position relevée vers le haut et vers l'arrière, c'est-à-dire en position prête au chaussage. La partie de la lame située entre cette zone de flexion 55 et la zone d'extrémité 52 avant de la lame correspond à la zone de déformation du moyen d'arrêt 50 lorsque la mâchoire arrière 30 bascule de sa position d'ouverture P2 à sa position de maintien P1 ou inversement, la déformation de la lame étant alors accentuée vers le bas.

Autrement dit, le moyen d'arrêt 50 se comporte comme une lame encastréelibre, travaillant en flexion. Elle est encastrée dans le corps de la pédale au niveau de sa languette formant la deuxième zone de liaison 53, et jusqu'à sa zone de courbure ou de flexion 55. Elle est libre à l'autre extrémité, du côté des branches 52a et 52b. Au repos, en position relevée, la lame, qui est sensiblement horizontale ou légèrement déformée du fait de sa précontrainte, maintient la mâchoire arrière 30 ouverte, basculée vers l'arrière, prête au chaussage.

En variante, le moyen d'arrêt 50 peut comprendre toute autre liaison avec le corps 20. Une telle liaison peut être une fixation de type vis, rivet ou soudure, ou un simple maintien par une butée. Avantageusement, cette liaison sur le corps 20 est réalisée au niveau d'une extrémité arrière du moyen d'arrêt 50. Avantageusement, cette liaison du moyen d'arrêt 50 sur le corps 20 est positionnée en arrière de la mâchoire arrière. Elle est avantageusement positionnée en arrière de l'axe de rotation 80 de la mâchoire arrière 30.

De même, la liaison entre le moyen d'arrêt 50 et la mâchoire arrière 30 peut être différente du mode de réalisation décrit. Le moyen d'arrêt 50 peut donc se présenter selon une autre géométrie que celle décrite dans ce mode de réalisation. De préférence, le moyen d'arrêt 50 est un élément élastique. Dans tous les cas, la deuxième zone de liaison du moyen d'arrêt 50 avec le corps 20 est disposée à l'arrière de la première zone de liaison du moyen d'arrêt 50 avec la mâchoire arrière 30. De façon générale, le moyen d'arrêt 50 est positionné entièrement en arrière de l'axe de rotation de la pédale 10. De plus, il s'étend en partie au moins en arrière de l'axe de rotation 80 de la mâchoire arrière 30.

Le fonctionnement de la pédale selon le mode de réalisation de l'invention va maintenant être expliqué.

La pédale 2 comprend une unique ouverture 7 disposée entre la mâchoire avant 21 et la mâchoire arrière 30, apte à recevoir une cale 70 de chaussure, comme représenté par les figures 9 et 10. L'intégralité de la cale 70 de chaussure positionnée sous la semelle de la chaussure est destinée à être logée dans cette ouverture 7. Bien sûr, on ne sortira pas du cadre de l'invention si cette ouverture est fermée dans la partie centrale entre deux parties de cale avant et arrière.

Selon le mode de réalisation, la pédale 2 est adaptée pour coopérer avec une chaussure traditionnelle. La cale 70 d'une telle chaussure, représentée sur les figures 9 et 10, comprend une surface de contact 71 supérieure destinée à être en contact avec la semelle de la chaussure du cycliste, un bec avant 72 et un bec arrière 73. Le bec avant 72 et le bec arrière 73 sont des proéminences s'étendant respectivement vers l'avant et vers l'arrière. Ces deux becs 72, 73 forment des trottoirs adaptés pour coopérer avec les mâchoires 21 et 30 de fixation de la pédale. La cale comprend en outre une surface de butée avant 74 s'étendant sensiblement perpendiculairement à la surface de contact 71 au-dessus du bec avant 72 et une surface de butée arrière 75 s'étendant s'étendant sensiblement perpendiculairement à la surface de contact 71 au-dessus du bec arrière 73. La cale peut être un ensemble monobloc ou deux pièces indépendantes l'une de l'autre dans une variante non représentée. La cale peut par exemple être fabriquée à partir de plastique injecté, éventuellement chargé de fibres. La cale peut en outre comprendre un ou plusieurs éléments métalliques pour améliorer sa résistance à l'usure.

La figure 9 représente la pédale dans une position d'ouverture, dans une phase d'approche d'une cale 70 de chaussure en phase initiale d'enclenchement d'une chaussure. Dans cette position, le moyen d'arrêt 50 est dans sa position d'ouverture P2 et fait saillie partiellement dans l'ouverture 7, depuis l'arrière vers l'avant. Plus précisément, la zone d'extrémité 52 comprenant les deux branches 52a, 52b du moyen d'arrêt 50 forme une surface de réception apte à recevoir un appui vertical de la cale 70 et donc de la chaussure de l'utilisateur, et notamment d'un bec arrière 73 de la cale 70. Seule la surface de réception fait saillie dans l'ouverture 7. La portion du moyen d'arrêt 50 formant cette surface de réception est d'une longueur de quelques millimètres, de préférence entre 4 et 9 millimètres. Cette longueur est suffisamment grande pour être sûr de sa coopération facile avec la cale de la chaussure lors du chaussage et suffisamment petite pour ne dépasser que très faiblement dans l'ouverture 7 pour ne pas que la cale puisse venir l'activer de façon intempestive lorsque la chaussure se positionne lors d'un premier mouvement dans la mâchoire avant 21. On note que la longueur du moyen d'arrêt faisant saillie dans l'ouverture 7 représente avantageusement moins de 25% de la longueur totale de l'ouverture 7. La longueur totale de la lame est de plus avantageusement supérieure ou égale à 25 % de cette longueur totale de l'ouverture 7.

En remarque, lorsque la mâchoire arrière 30 est en position d'ouverture P2, le moyen de rappel élastique 40 tend à faire pivoter la mâchoire arrière 30 vers l'avant par rapport au corps 20. La mâchoire arrière 30 imprime donc un effort sur le moyen d'arrêt 50 par l'intermédiaire des deux surfaces de butée 36 en appui sur chacun des deux replis 54. Cet effort est orienté vers l'avant. Comme le moyen d'arrêt est retenu dans le corps 20 par la deuxième zone de liaison 53, la mâchoire arrière 30 exerce donc un effort en flexion sur le moyen d'arrêt 50.

Lorsque le cycliste souhaite enclencher la pédale alors que la mâchoire arrière 30 est en position d'ouverture P2, il commence dans un premier temps par insérer le bec avant 72 de la cale 70 sous la barre transversale 22 de la mâchoire avant 21, dans l'ouverture 24. Il atteint alors la configuration représentée par la figure 9. A ce stade, le risque que la chaussure ou la cale fixée sous la chaussure appuie accidentellement sur le moyen d'arrêt 50 est très faible, voire inexistant, car le moyen d'arrêt 50 ne fait saillie que partiellement dans une partie arrière de l'ouverture 7, comme explicité précédemment.

Dans un deuxième temps, le cycliste exerce avec le bec arrière 73 de la cale un appui vertical directement sur la surface de réception 52 du moyen d'arrêt 50. Le moyen d'arrêt 50 fléchit alors autour de sa zone de flexion 55. La cale 70 exerce donc un effort en flexion sur le moyen d'arrêt. Les deux replis 54 glissent alors le long des pattes de maintien 32a, 32b vers le bas de sorte qu'ils perdent leur appui contre les surfaces de butées 36. La retenue de la mâchoire arrière 30 par le moyen d'arrêt 50 est alors désactivée. Ainsi, la mâchoire arrière 30 pivote librement vers l'avant, sous l'effet du moyen de rappel élastique 40, jusqu'à venir en appui contre la surface de butée arrière 75 de la cale 70, dans sa position de maintien P1, représentée sur la figure 10. La cale 70 est alors maintenue sur la pédale 2 entre la mâchoire avant 21 et la mâchoire arrière 30. La chaussure est donc fermement maintenue à la pédale 2.

L'effort nécessaire pour faire basculer la mâchoire arrière de sa position d'ouverture à sa position de maintien correspond d'une part à l'effort nécessaire pour vaincre la friction à l'interface entre les surfaces de butée 36 et les deux replis 54, et d'autre part à l'effort nécessaire pour faire fléchir le moyen d'arrêt au niveau de sa zone de flexion 55. Cet effort dépend fortement de la longueur du moyen d'arrêt. Le positionnement du moyen d'arrêt 50 selon le mode de réalisation de l'invention lui permet de s'étendre vers l'arrière sur une longueur importante, ce qui lui permet de remplir sa fonction de maintien de la mâchoire arrière en position ouverte, comme explicité précédemment, tout en offrant une faible résistance à l'appui verticale de la chaussure en phase de chaussage, ce qui permet un chaussage convivial.

Plus précisément, on note que dans le mode de réalisation de l'invention, la partie libre de la lame, lui permettant de fléchir, s'étend de la zone de flexion 55 à la zone d'extrémité 52, soit sur une longueur importante, ce qui induit que l'amplitude de flexion du moyen d'arrêt 50 est modéré et donc que l'effort pour faire fléchir le moyen d'arrêt est également modéré. En effet, on note que la longueur de cette partie libre de la lame formant le moyen d'arrêt 50 est notamment supérieure à la distance axiale D, mesurée dans la direction longitudinale, entre l'axe de rotation de la pédale 10 et l'axe de rotation 80 de la mâchoire arrière 30. Avantageusement, cette distance est même supérieure d'au moins 10% à cette distance axiale D. La partie libre du moyen d'arrêt, c'est-à-dire la partie remplissant la fonction élastique, travaillant en flexion selon le mode de réalisation, présente avantageusement une longueur supérieure ou égale à 15 millimètres, voire supérieure ou égale à 20 millimètres. Selon un mode de réalisation, le moyen d'arrêt se présente sous la forme d'une lame, comprenant une partie encastrée d'environ 12 millimètres et une partie libre d'environ 22 millimètres. La partie encastrée peut présenter toute autre longueur, de préférence entre 10 et 15 millimètres inclus pour assurer un bon ancrage. En remarque, comme la lame s'étend dans la partie arrière du corps de la pédale, qui peut être facilement rallongée si nécessaire, il est possible de choisir d'avoir une lame avec une partie libre suffisamment longue pour diminuer l'effort de chaussage. Avantageusement, cet effort de chaussage est faible et est choisi entre 20 et 50 N, voire entre 20 et 30 N inclus, et est atteint par une lame présentant les caractéristiques décrites ci-dessus (notamment la longueur de sa partie libre). En remarque, cet effort de chaussage est réduit de 50 à 80% par rapport à la même solution sans le moyen d'arrêt 50 de l'invention.

Finalement, lorsque la mâchoire arrière 30 est dans sa position de maintien P1, la flexion du moyen d'arrêt 50 est telle qu'il s'efface vers le bas, comme représenté en figure 10. La cale prend alors appui verticalement directement sur la zone de réception à l'extrémité de la lame et également latéralement sur une surface d'appui 29 horizontale du corps 20. Dans cette configuration de la pédale, la flexion du moyen d'arrêt 50 au niveau de sa zone de flexion 55 est davantage prononcée. La flexion du moyen d'arrêt s'établit le long d'un bord transversal 27 à une sortie de l'ouverture longitudinale 25 du corps 20, c'est-à-dire à proximité de la frontière de la partie encastrée de la lame. Le bord transversal 27 constitue une ligne d'appui favorisant la déformation du moyen d'arrêt 50. La zone de flexion 55 est donc une ligne transversale s'étendant à l'aplomb du bord 27. En variante, la zone de flexion 55 pourrait non pas être une ligne de flexion mais une portion plus large de la partie longitudinale 51, s'étendant sur tout ou partie de la partie libre du moyen d'arrêt. De plus, le moyen d'arrêt 50 pourrait être courbé pour exercer la précontrainte nécessaire pour maintenir la mâchoire arrière 30 en position ouverte.

De manière classique le cycliste pourra par la suite désassembler la pédale de sa chaussure, par exemple par un mouvement de rotation du talon qui provoquera le retour de la mâchoire arrière 30 de la position de maintien P1 à la position d'ouverture P2, lorsque l'utilisateur souhaite déchausser ou éventuellement en cas de chute par déclenchement automatique de la pédale 2.

Grâce à l'invention, la longueur du moyen d'arrêt 50 n'est pas limitée par la distance séparant la mâchoire arrière 30 de la mâchoire avant 21, puisque ce moyen d'arrêt s'étend vers l'arrière de la pédale. Ainsi, comme explicité précédemment, on peut concevoir une pédale dont la mâchoire arrière est relativement proche de la mâchoire avant, tout en conservant une longueur du moyen d'arrêt suffisamment grande, ce qui limite l'amplitude de sa flexion entre les deux positions de la mâchoire arrière. On peut ainsi réaliser une pédale et une cale associée à la pédale particulièrement compacte, facile à chausser, avec des efforts de chaussage réduits et ne présentant pas de risque de basculement intempestif de la mâchoire, en particulier lors de l'accostage de la cale de la chaussure sur la pédale au moment du chaussage. L'invention présente donc l'avantage de proposer une pédale prête à chausser, où l'effort de chaussage est le plus faible possible, pour un chaussage facile, tout en offrant un chaussage sûr, notamment sans fermeture intempestive avant le chaussage, ce qui en fait un chaussage convivial.

L'invention se rapporte également à un kit comprenant au moins une pédale 2 telle que définie précédemment et au moins une cale 70 apte à être fixée à une semelle d'une chaussure, et apte à coopérer avec la pédale 2. De préférence, le kit comprend deux pédales 2 et deux cales 70. Un tel kit permet de changer les pédales d'une bicyclette.

Selon une variante de réalisation (non représentée), c'est la mâchoire avant qui pourrait être mobile entre une position de maintien et une position d'ouverture tandis que la mâchoire arrière serait fixe. La mâchoire avant pivoterait alors de l'arrière vers l'avant pour passer de sa position de maintien à sa position d'ouverture. De la même manière que précédemment la pédale comprendrait un moyen d'arrêt pourvu d'une première zone de liaison et d'une deuxième zone de liaison. La première zone de liaison coopèrerait avec la mâchoire avant et la deuxième zone de liaison serait liée au corps de la pédale, notamment elle serait encastrée dans le corps de la pédale. La deuxième zone de liaison serait alors positionnée à l'avant de la première zone de liaison, voire même à l'avant d'un axe de rotation de la mâchoire avant. Autrement dit, la deuxième zone de liaison s'étendrait dans la direction définie par le déplacement de la mâchoire lorsqu'elle passe de sa position de maintien à sa position d'ouverture.

Selon une autre variante de réalisation (également non représentée), à la fois la mâchoire arrière et la mâchoire avant pourrait être mobile entre une position de maintien et une position d'ouverture. La pédale pourrait alors comprendre deux moyens d'arrêts tels que décrits précédemment, chaque moyen d'arrêt coopérant avec l'une des deux mâchoires.

Enfin selon encore une autre variante de réalisation, la pédale pourrait comprendre deux paires de mâchoires agencées sur deux côtés opposés de la pédale. Seule une paire de mâchoire coopérerait avec la cale sous la chaussure pour maintenir la chaussure tandis que la deuxième paire de mâchoire ferait face au sol et resterait inactive. Un tel agencement permet notamment au cycliste de chausser la pédale encore plus efficacement puisqu'il n'a pas besoin de retourner la pédale si celle-ci se présente retournée.

## Revendications

1. Pédale (2) pour une bicyclette (1) comprenant :
- un corps (20) rotatif destiné à être monté sur un axe de pédale (10),
- une mâchoire (30) destinée à coopérer avec une cale (70) fixée sous une semelle d'une chaussure, la mâchoire (30) étant mobile entre une position de maintien (P1) dans laquelle elle participe au maintien en position d'une cale (70) de chaussure sur la pédale (2), et une position d'ouverture (P2) dans laquelle elle libère une cale (70) de chaussure de la pédale (2),
- un moyen de rappel élastique (40) agencé de sorte à contraindre la mâchoire (30) vers la position de maintien (P1), ladite pédale comprenant :
- un moyen d'arrêt (50), ledit moyen d'arrêt (50) comprenant une première zone de liaison (52a, 52b) coopérant avec la mâchoire (30) de sorte à retenir la mâchoire (30) dans la position d'ouverture (P2) à l'encontre du moyen de rappel élastique (40) en l'absence d'une cale (70) de chaussure, ledit moyen d'arrêt (50) comprenant une deuxième zone de liaison (53) avec le corps (20), ledit moyen d'arrêt s'étendant depuis sa première zone de liaison (52a, 52b) vers sa deuxième zone de liaison (53), **caractérisée en ce que** ladite deuxième zone de liaison s'étend dans la direction définie par le déplacement de la mâchoire (30) lorsqu'elle passe de sa position de maintien (P1) à sa position d'ouverture (P2).

2. Pédale (2) selon la revendication précédente, **caractérisée en ce que** la deuxième zone de liaison (53) est liée avec le corps (20) de la pédale (2).

3. Pédale (2) selon l'une des revendications précédentes, **caractérisée en ce que** la mâchoire (30) est une mâchoire arrière, la deuxième zone de liaison (53) étant positionnée à l'arrière de la première zone de liaison (52a, 52b),
ou **en ce que** la mâchoire (30) est une mâchoire avant, la deuxième zone de liaison étant positionnée à l'avant de la première zone de liaison.

4. Pédale (2) selon l'une des revendications précédentes, **caractérisée en ce que** le moyen d'arrêt (50) se présente sous la forme d'une lame comprenant une partie libre travaillant en flexion.

5. Pédale (2) selon l'une des revendications précédentes, **caractérisée en ce que** le moyen d'arrêt (50) présente une partie libre travaillant en flexion de longueur strictement supérieure à la longueur (D) mesurée dans la direction longitudinale entre un axe de la pédale (10) et un axe de rotation (80) de la mâchoire (30).

6. Pédale (2) selon l'une des revendications précédentes, **caractérisée en ce que** la deuxième zone de liaison (53) avec le corps (20) du moyen d'arrêt (50) comprend une languette encastrée au sein du corps (20).

7. Pédale (2) selon l'une des revendications précédentes, **caractérisée en ce que** la mâchoire (30) est une mâchoire arrière, la deuxième zone de liaison (53) avec le corps (20) du moyen d'arrêt (50) étant disposée à l'arrière d'un axe de rotation (80) de la mâchoire (30) arrière,
ou **en ce que** la mâchoire (30) est une mâchoire avant, la deuxième zone de liaison (53) avec le corps (20) du moyen d'arrêt (50) étant disposée à l'avant d'un axe de rotation (80) de la mâchoire (30) avant.

8. Pédale (2) selon l'une des revendications précédentes, **caractérisée en ce que** la première zone de liaison du moyen d'arrêt (50) comprend deux branches (52a, 52b) de part et d'autre d'une zone d'extrémité (52) du moyen d'arrêt (50), pour coopérer avec la mâchoire (30), le moyen d'arrêt (50) se présentant comme une lame en forme de « T ».

9. Pédale (2) selon l'une des revendications précédentes, **caractérisée en ce que** le moyen d'arrêt (50) comprend une surface de réception apte à recevoir l'appui d'une cale (70) fixée sous une semelle d'une chaussure pour désactiver la retenue de la mâchoire (30) en exerçant un effort en flexion sur le moyen d'arrêt (50).

10. Pédale (2) selon l'une des revendications précédentes, **caractérisée en ce que** la mâchoire (30) présente une forme d'arceau articulée par sa partie inférieure autour d'un axe de rotation (80) fixé sur le corps (20) et comprend un élément transversal (31) en partie supérieure apte à coopérer avec une partie d'une cale (70) de chaussure.

11. Pédale (2) selon l'une des revendications précédentes, **caractérisée en ce que** la mâchoire (30) comprend une ouverture (37) centrale au travers de laquelle s'étend le moyen d'arrêt (50).

12. Pédale (2) selon l'une des revendications précédentes, **caractérisée en ce qu'**elle comprend une unique ouverture (7) apte à recevoir une cale (70) fixée sous une semelle d'une chaussure, l'ouverture (7) étant délimitée à l'avant par une mâchoire avant (21) et à l'arrière par une mâchoire arrière (30).

13. Pédale (2) selon la revendication précédente **caractérisée en ce que** le moyen d'arrêt (50) fait saillie partiellement dans ladite ouverture (7) depuis la deuxième zone de liaison vers la première zone de liaison, lorsque la mâchoire est dans la position d'ouverture (P2), sur une longueur inférieure ou égale à 25% de la longueur de l'ouverture (7).

14. Kit comprenant au moins une pédale (2) selon l'une des revendications précédentes et au moins une cale (70) apte à être fixée à une semelle d'une chaussure, et apte à coopérer avec la pédale (2).

15. Bicyclette (1) comprenant une pédale (2), notamment deux pédales (2), selon l'une des revendications 1 à 13.

## Patentansprüche

1. Pedal (2) für ein Fahrrad (1), umfassend:
- einen drehbaren Körper (20), der dazu bestimmt ist, auf einer Pedalachse (10) montiert zu sein,
- eine Backe (30), die dazu bestimmt ist, mit einem unter einer Sohle eines Schuhs befestigen Keil (70) zusammenzuwirken, wobei die Backe (30) zwischen einer Halteposition (P1), in der sie dazu beiträgt, einen Schuhkeil (70) auf dem Pedal (2) in Position zu halten, und einer Öffnungsposition (P2), in der sie einen Schulkeil (70) vom Pedal (2) freigibt, bewegbar ist,
- ein elastisches Rückstellmittel (40), das so angeordnet ist, dass es die Backe (30) in die Halteposition (P1) zwingt,
wobei das Pedal Folgendes umfasst:
- ein Arretierungsmittel (50), wobei das Arretierungsmittel (50) einen ersten Verbindungsbereich (52a, 52b) umfasst, der mit der Backe (30) zusammenwirkt, um bei Abwesenheit eines Schuhkeils (70) die Backe (30) in der Öffnungsposition (P2) gegen das elastische Rückstellmittel (40) zu halten, wobei das Arretierungsmittel (50) einen zweiten Bereich (53) zur Verbindung mit dem Körper (20) umfasst, wobei sich das Arretierungsmittel von seinem ersten Verbindungsbereich (52a, 52b) zu seinem zweiten Verbindungsbereich (53) erstreckt,
**dadurch gekennzeichnet, dass** sich der zweite Verbindungsbereich in der Richtung erstreckt, die durch die Bewegung der Backe (30) definiert ist, wenn sie aus ihrer Halteposition (P1) in ihre Öffnungsposition (P2) übergeht.

2. Pedal (2) nach dem vorangehenden Anspruch, **dadurch gekennzeichnet, dass** der zweite Verbindungsbereich (53) mit dem Körper (20) des Pedals (2) verbunden ist.

3. Pedal (2) nach einem der vorangehenden Ansprüche, **dadurch gekennzeichnet,**
**dass** die Backe (30) eine hintere Backe ist, wobei der zweite Verbindungsbereich (53) hinter dem ersten Verbindungsbereich (52a, 52b) positioniert ist, oder dass die Backe (30) eine vordere Backe ist, wobei der zweite Verbindungsbereich vor dem ersten Verbindungsbereich positioniert ist.

4. Pedal (2) nach einem der vorangehenden Ansprüche, **dadurch gekennzeichnet, dass** das Arretierungsmittel (50) die Form einer Klinge aufweist, die einen auf Biegung arbeitenden freien Teil umfasst.

5. Pedal (2) nach einem der vorangehenden Ansprüche, **dadurch gekennzeichnet, dass** das Arretierungsmittel (50) einen auf Biegung arbeitenden freien Teil aufweist, dessen Länge strikt größer als die in der Längsrichtung zwischen einer Achse des Pedals (10) und einer Drehachse (80) der Backe (30) gemessene Länge (D) ist.

6. Pedal (2) nach einem der vorangehenden Ansprüche, **dadurch gekennzeichnet, dass** der zweite Verbindungsbereich (53) mit dem Körper (20) des Arretierungsmittels (50) eine in den Körper (20) eingebettete Zunge umfasst.

7. Pedal (2) nach einem der vorangehenden Ansprüche, **dadurch gekennzeichnet,**
**dass** die Backe (30) eine hintere Backe ist, wobei der zweite Verbindungsbereich (53) mit dem Körper (20) des Arretierungsmittels (50) hinter einer Drehachse (80) der hinteren Backe (30) angeordnet ist, oder
**dass** die Backe (30) eine vordere Backe ist, wobei der zweite Verbindungsbereich (53) mit dem Körper (20) des Arretierungsmittels (50) vor einer Drehachse (80) der vorderen Backe (30) angeordnet ist.

8. Pedal (2) nach einem der vorangehenden Ansprüche, **dadurch gekennzeichnet, dass** der erste Verbindungsbereich des Arretierungsmittels (50) zwei Schenkel (52a, 52b) auf beiden Seiten eines Endbereichs (52) des Arretierungsmittels (50) umfasst, um mit der Backe (30) zusammenzuwirken, wobei das Arretierungsmittel (50) als eine "T"-förmige Klinge vorliegt.

9. Pedal (2) nach einem der vorangehenden Ansprüche, **dadurch gekennzeichnet, dass** das Arretierungsmittel (50) eine Aufnahmefläche aufweist, die dazu geeignet ist, die Auflage eines unter einer Sohle eines Schuhs befestigten Keils (70) aufzunehmen, um den Rückhalt der Backe (30) zu deaktivieren, indem eine Biegekraft auf das Arretierungsmittel (50) ausgeübt wird.

10. Pedal (2) nach einem der vorangehenden Ansprüche, **dadurch gekennzeichnet, dass** die Backe (30) die Form eines Bügels aufweist, der mit seinem unteren Teil um eine am Körper (20) befestigte Drehachse (80) angelenkt ist, und im oberen Teil ein Querelement (31) umfasst, das mit einem Teil eines Schuhkeils (70) zusammenwirken kann.

11. Pedal (2) nach einem der vorangehenden Ansprüche, **dadurch gekennzeichnet, dass** die Backe (30) eine zentrale Öffnung (37) umfasst, durch die sich das Arretierungsmittel (50) erstreckt.

12. Pedal (2) nach einem der vorangehenden Ansprüche, **dadurch gekennzeichnet, dass** es eine einzige Öffnung (7) umfasst, die dazu geeignet ist, einen unter einer Sohle eines Schuhs befestigten Keil (70) aufzunehmen, wobei die Öffnung (7) vorn durch eine vordere Backe (21) und hinten durch eine hintere Backe (30) begrenzt wird.

13. Pedal (2) nach dem vorangehenden Anspruch **dadurch gekennzeichnet, dass** das Arretierungsmittel (50) vom zweiten Verbindungsbereich zum ersten Verbindungsbereich teilweise in die Öffnung (7) ragt, wenn sich die Backe in der Öffnungsposition (P2) befindet, und zwar über eine Länge von 25 % der Länge der Öffnung (7) oder weniger.

14. Set, umfassend mindestens ein Pedal (2) nach einem der vorangehenden Ansprüche und mindestens einen Keil (70), der an einer Sohle eines Schuhs befestigt werden und mit dem Pedal (2) zusammenwirken kann.

15. Fahrrad (1), umfassend ein Pedal (2), insbesondere zwei Pedale (2), nach einem der Ansprüche 1 bis 13.

## Claims

1. Pedal (2) for a bicycle (1), comprising:
- a rotary body (20) intended to be mounted on a pedal axle (10),
- a jaw (30) intended to cooperate with a cleat (70) fastened beneath a sole of a shoe, the jaw (30) being able to move between a holding position (P1) in which it contributes to holding a shoe cleat (70) in position on the pedal (2), and an open position (P2) in which it releases a shoe cleat (70) from the pedal (2),
- an elastic return means (40) arranged so as to force the jaw (30) towards the holding position (P1), said pedal comprising:
- a stop means (50), said stop means (50) comprising a first zone of connection (52a, 52b) cooperating with the jaw (30) so as to keep the jaw (30) in the open position (P2) against the action of the elastic return means (40) in the absence of a shoe cleat (70), said stop means (50) comprising a second zone of connection (53) with the body (20), said stop means extending from its first zone of connection (52a, 52b) towards its second zone of connection (53), **characterized in that** said second zone of connection extends in the direction defined by the movement of the jaw (30) when it passes from its holding position (P1) to its open position (P2).

2. Pedal (2) according to the preceding claim, **characterized in that** the second zone of connection (53) is connected with the body (20) of the pedal (2).

3. Pedal (2) according to either of the preceding claims, **characterized in that** the jaw (30) is a rear jaw, the second zone of connection (53) being positioned behind the first zone of connection (52a, 52b),
or **in that** the jaw (30) is a front jaw, the second zone of connection being positioned in front of the first zone of connection.

4. Pedal (2) according to one of the preceding claims, **characterized in that** the stop means (50) is in the form of a blade comprising a free part operating in flexion.

5. Pedal (2) according to one of the preceding claims, **characterized in that** the stop means (50) has a free part operating in flexion having a length strictly greater than the length (D) measured in the longitudinal direction between an axle of the pedal (10) and a rotation axle (80) of the jaw (30).

6. Pedal (2) according to one of the preceding claims, **characterized in that** the second zone of connection (53) with the body (20) of the stop means (50) comprises a tongue embedded within the body (20).

7. Pedal (2) according to one of the preceding claims, **characterized in that** the jaw (30) is a rear jaw, the second zone of connection (53) with the body (20) of the stop means (50) being disposed behind a rotation axle (80) of the rear jaw (30),
or **in that** the jaw (30) is a front jaw, the second zone of connection (53) with the body (20) of the stop means (50) being disposed in front of a rotation axle (80) of the front jaw (30).

8. Pedal (2) according to one of the preceding claims, **characterized in that** the first zone of connection of the stop means (50) comprises two arms (52a, 52b) on either side of an end zone (52) of the stop means (50), so as to cooperate with the jaw (30), the stop means (50) being in the form of a blade in the shape of a "T".

9. Pedal (2) according to one of the preceding claims, **characterized in** the stop means (50) comprises a receiving surface that is able to have a cleat (70) fastened beneath a sole of a shoe bearing against it, so as to deactivate the retaining of the jaw (30) by exerting a flexion force on the stop means (50).

10. Pedal (2) according to one of the preceding claims, **characterized in that** the jaw (30) has a bow shape articulated via its lower part about a rotation axle (80) fastened to the body (20) and comprises a transverse element (31) in the upper part that is able to cooperate with a part of a shoe cleat (70).

11. Pedal (2) according to one of the preceding claims, **characterized in that** the jaw (30) comprises a central opening (37) through which the stop means (50) extends.

12. Pedal (2) according to one of the preceding claims, **characterized in that** it comprises a single opening (7) able to receive a cleat (70) fastened beneath a sole of a shoe, the opening (7) being delimited at the front by a front jaw (21) and at the rear by a rear jaw (30).

13. Pedal (2) according to the preceding claim, **characterized in that** the stop means (50) protrudes partially into said opening (7) from the second zone of connection towards the first zone of connection, when the jaw is in the open position (P2), over a length less than or equal to 25% of the length of the opening (7).

14. Kit comprising at least one pedal (2) according to one of the preceding claims and at least one cleat (70) able to be fastened to a sole of a shoe and able to cooperate with the pedal (2).

15. Bicycle (1) comprising a pedal (2), in particular two pedals (2), according to one of Claims 1 to 13.
